# EUROPEAN PATENT SPECIFICATION

(11) **EP 3 667 326 B1**
(45) Date of publication and mention of the grant of the patent: **19.06.2024**
(21) Application number: 19212849.4
(22) Date of filing: 02.12.2019
(51) Int. Cl.: G01N 35/00

(54) **SAMPLE ANALYSIS SYSTEM, CONTROLLER, START-UP METHOD FOR SAMPLE ANALYZER, AND NON-TRANSITORY STORAGE MEDIUM**
PROBENANALYSESYSTEM, STEUERGERÄT, STARTVERFAHREN FÜR PROBENANALYSATOR UND NICHTTRANSITORISCHES SPEICHERMEDIUM
SYSTÈME D'ANALYSE D'ÉCHANTILLONS, ORGANE DE COMMANDE, PROCÉDÉ DE DÉMARRAGE POUR ANALYSEUR D'ÉCHANTILLONS ET SUPPORT D'ENREGISTREMENT NON TRANSITOIRE

(30) Priority: 10.12.2018 JP 2018231226
(43) Date of publication of application: 17.06.2020
(73) Proprietor: SYSMEX CORPORATION, Kobe-shi Hyogo 651-0073 (JP)
(72) Inventor: Yao, Syunsuke, Hyogo, 651-0073 (JP); Kajino, Shouhei, Hyogo, 651-0073 (JP)
(74) Representative: Hoffmann Eitle

(56) References cited:
- CN-A- 108 037 298
- JP-A- 2001 296 301
- US-A1- 2017 317 900

## Description

### FIELD OF THE INVENTION

The present invention relates to a sample analysis system, a controller, a start-up method for a sample analyzer, and a non-transitory storage medium.

### BACKGROUND

Sample analyzers for measuring samples such as blood and urine collected from patients are used in medical facilities such as hospitals and examination centers. Sample analyzers such as blood cell counters, blood coagulation measuring devices, immunoassay devices, biochemical analyzers, and urine analyzers installed in medical facilities generally perform a startup operation such as cleaning the device when the devices are started. The start-up operation takes, for example, several tens of minutes, so even if the sample analyzer is turned on in a medical facility, a great deal of time is wasted before the sample measurement operation can be actually started.

Here, a sample analyzer is known in which the time for starting the apparatus is set in advance and can be automatically started when the set time is reached. For example, Japanese Patent Application Publication No. 2013-076624 discloses a sample analyzer that accepts a setting for automatic activation and performs a shutdown operation in consideration of the amount of consumables required at the next automatic activation so that automatic activation is reliably performed. JP 2001296301 A relates to an information processing device connected to a plurality of automatic analyzing devices. A schedule operation of an automatic analyzing device can be performed.

US 20170317900 A1 relates to an analyzing device, a computer for analysis and a server. In a function table, an instruction includes designation of the computer for analysis or the server, and a process to be executed by the designated computer for analysis or server.

CN 108037298 A relates to detection technology field, in particular to an automatic analyzer used in the medical or chemical field, a wake-up control method of an automatic analyzer, and a control system of an automatic analyzer.

### SUMMARY OF THE INVENTION

However, many sample analyzers are installed in medical facilities in accordance with the types of samples, measurement items, the number of samples that must be measured in one day and the like. In the sample analyzer described in Japanese Patent Application Publication No. 2013-076624, it is necessary to set a start-up time for each device near each sample analyzer, and setting automatic start-up is a great burden for the user of a medical facility which has a large number of sample analyzers installed.

It is desired to reduce the burden of work for setting automatic start-up in a medical facility having a plurality of sample analyzers.

The object of the invention is achieved by the subject-matter of the independent claims. Advantageous embodiments are defined in the dependent claims. Further examples are provided for facilitating the understanding of the invention. A sample analysis system (100 to 100b) according to one aspect includes a plurality of sample analyzers (40a to 40g) that measure a sample, and a start-up controller (1) which is communicably connected to the plurality of sample analyzers (40a to 40g) for controlling the start-up of the plurality of sample analyzers (40a to 40g), wherein the start-up controller (1) selectively starts a sample analyzer to be activated among a plurality of sample analyzers (40a to 40g).

According to this configuration, the start-up of the plurality of analyzers (40a to 40g) is collectively controlled by the start-up controller (1). In this way, for example, it is possible to reduce the burden of work for setting automatic start-up in a medical facility having a plurality of sample analyzers.

The start-up controller (1) also may receive start-up time settings individually for a plurality of selected sample analyzers.

The start-up controller may be to set different start-up times for a plurality of selected sample analyzers.

In this way it is possible to freely set the start-up date and time for the sample analyzer (40a to 40g) to be activated.

The sample analyzer (40d, 40f) also may include a control board (400) for controlling a measurement unit (40) for measuring the sample, and configured to supply electricity to the control board (400) when the sample analyzer (40d, 40f) is started.

The sample analyzers (40a to 40g) may perform an initial operation after start-up.

In the initial operation, the sample analyzers (40a to 40g) may perform at least one of a cleaning operation and a background check of the measurement units (413a and 40) that measure the sample.

The start-up controller (1) includes a storage unit (13), and the storage unit (13) is configured to store information related to the start-up time of the sample analyzers (40a to 40g) associated with information specifying the sample analyzers (40a to 40g).

The start-up controller (1) may be configured to start the sample analyzers (40a to 40g) associated with the date/time information based on the date/time information stored in the storage unit (13).

In this way each of the analyzers to be started can be activated at a desired date and time.

The start-up controller (1) also may be capable of collectively setting start-up times for a plurality of days for at least one of weekday start-up time, holiday start-up time, and weekend start-up time.

The sample analyzer (40d, 40f) also may include a measurement unit (40) for measuring a sample and an analysis controller (55a, 55b) for analyzing measurement data output from the measurement unit (40).

The start-up controller (1) also may transmit a command instructing start-up to the analysis controller (55a, 55b).

The start-up controller (1) includes a display unit (11), and the start-up controller (1) displays on the display unit (11) a selection screen for accepting selection of a sample analyzer to be started from a plurality of sample analyzers (40a to 40g).

The start-up controller (1) also may include a display unit (11), and the start-up controller (1) may display a calendar on the display unit (11).

The start-up controller (1) also may display information specifying the sample analyzer and information regarding the start-up time on the display unit (11) in association with the calendar date.

According to the above configuration, the start-up target sample analyzer (40a to 40g) and the start-up target analyzer (40a to 40g) date and time for start-up are associated and displayed on the display of the calendar date. In this way it is possible to make the user visually recognize the start-up target sample analyzer and the date and time for activation.

The start-up controller (1) also may be capable of transmitting a start-up command for immediately activating the selected plurality of sample analyzers (40a to 401).

The sample analyzer (40f, 40g) includes a sample transport unit (461-463) for transporting a sample, and the start-up controller (1) also may be configured to selectively start the sample transport unit (40f, 40g).

A start-up controller (1) according to another aspect of the present invention is communicably connected to a plurality of sample analyzers (40a to 40g) for measuring a sample such that the start-up controller (1) controls the start-up of plurality of sample analyzers (40a to 40g), and a control unit (10) is provided that selectively activates a start-up target sample analyzer among the plurality of sample analyzers (40a to 40g).

According to this configuration, the start-up of the plurality of analyzers (40a to 40g) is collectively controlled by the start-up controller (1). In this way it is possible to reduce the burden of work for setting automatic start-up in a medical facility and the like having a plurality of sample analyzers.

The control unit (10) also may receive start-up time settings individually for a plurality of selected sample analyzers.

In this way each of the start-up target sample analyzers can be started at a desired time.

A start-up method for a sample analyzer (40a to 40g) according to another aspect of the present invention is a start-up method for starting a plurality of sample analyzers (40a to 40g) for measuring a sample, the method comprising a step (S12) for receiving selection of a start-up target sample analyzer from a plurality of sample analyzers (40a to 40g), and step (S32) of selectively starting a start-up target sample analyzer among the plurality of sample analyzers (40a to 40g).

According to this configuration, the start-up of a plurality of sample analyzers (40a to 40g) is collectively set. In this way it is possible to easily control the start-up of the plurality of analyzers (40a to 40g) included in the sample analysis system (100 to 100b).

The setting of the start-up time is individually received for the plurality of sample analyzers in step (S12) for receiving selection of a start-up target sample analyzer, and the sample analyzer to be started at the received start-up time is started in step (S32) for selectively starting a sample analyzer.

In this way each of the start-up target sample analyzers can be started at a desired time.

In the step (S32) of selectively starting the sample analyzer, a start-up command including a signal for specifying the start-up target sample analyzer may be transmitted to all the registered sample analyzers.

A non-transitory storage medium according to another aspect of the present invention includes a computer program which is executable by a computer to perform operations including: receiving a selection of a sample analyzer among a plurality of sample analyzers for measuring samples; and selectively starting up the selected sample analyzer among the plurality of sample analyzers.

According to this non-transitory storage medium, it is possible to collectively set the start-up of a plurality of sample analyzers (40a to 40g). In this way it is possible to reduce the work burden on the user who sets the start-up of a plurality of analyzers (40a to 40g).

According to these inventions, the burden of the work of setting automatic start-up can be reduced in medical facilities which have numerous sample analyzers.

### BRIEF DESCRIPTION OF THE DRAWINGS

FIG. 1 is a schematic diagram showing a structural example of a sample analysis system according to a first embodiment of the present invention;
FIG. 2 is a block diagram briefly illustrating an example of the structure of a start-up controller;
FIG. 3 is a functional block diagram illustrating an example of the structure of a sample analyzer;
FIG. 4 is a schematic diagram showing another structural example of the sample analysis system according to the present invention;
FIG. 5 is a functional block diagram illustrating a structural example of a sample analyzer;
FIG. 6 is a schematic diagram showing another structural example of the sample analysis system according to the present invention;
FIG. 7 is a functional block diagram illustrating an example of the structure of a sample analyzer;
FIG. 8A is a diagram showing the structures of a sample container T;
FIG. 8B is a diagram showing the structures of a sample rack;
FIG. 9 is a flowchart illustrating an example of a processing flow in which a start-up controller registers start-up schedule information;
FIG. 10 is a flowchart illustrating an example of a process flow in which a start-up controller generates and transmits a start-up command;
FIG. 11 is a diagram illustrating an example of start-up schedule information;
FIG. 12 is a diagram illustrating an example of a setting screen;
FIG. 13 is a diagram illustrating an example of a setting screen;
FIG. 14 is a diagram illustrating an example of a setting screen;
FIG. 15 is a diagram illustrating an example of a setting screen.

### DESCRIPTION OF THE EMBODIMENTS OF THE INVENTION

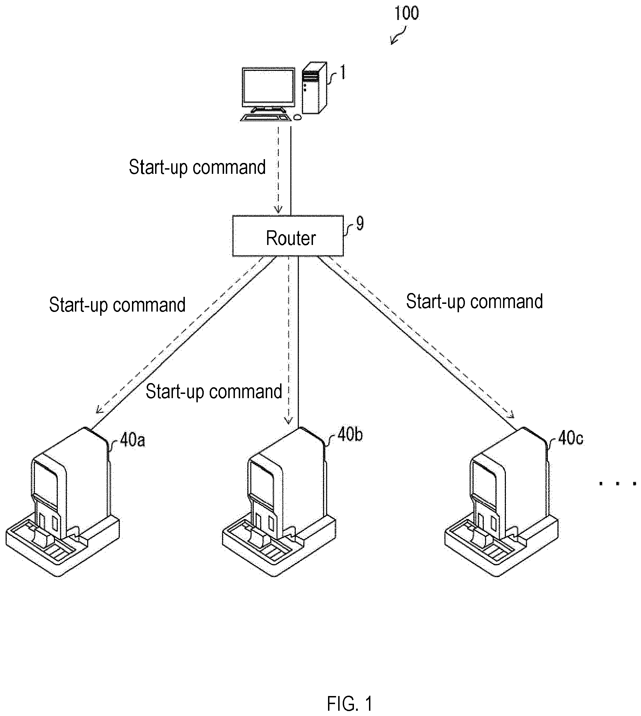

As shown in FIG. 1, the sample analysis system of one embodiment of the present invention connects a plurality of sample analyzers 40a, 40b, and 40c and the start-up controller 1 so as to be capable of communication among the devices. In the start-up controller 1, the user selects a sample analyzer to be activated from the plurality of sample analyzers 40a, 40b, and 40c. The start-up controller 1 transmits a start-up command according to the user's selection, and the sample analyzers 40a, 40b, and 40c are activated based on the start-up command.

Although a blood cell counter is described as an example of the sample analyzer in the embodiments below, the present invention is not limited to a blood cell counter. Examples of the sample analyzer include a blood coagulation measuring device, an immuno analyzer, a biochemical analyzer, and a urine analyzer in addition to a blood cell counter.

A blood cell counter is a sample analyzer that is used to automatically flow red blood cells, white blood cells, platelets, and other cells in blood collected from a patient through a flow cell, count blood cells, analyze the abundance ratio of blood cells by electrical impedance, light irradiation such as laser light, and measure the amount of hemoglobin.

The blood cell counter performs a start-up operation after the power is turned on. In the start-up operation, the mechanism and fluid part of the blood cell counter are initialized, the fluid part is washed, the temperature stabilization of the measurement module is awaited, and a background check is performed. Note that the mechanism of the blood cell counter and the start-up operation after power-on are incorporated in this specification by referring to the entirety of Japanese Patent Application Laid-Open No. 2010-107398.

Here, in the initialization of the mechanical unit, each mechanical unit of the blood cell counter is set to an initial position. In the initialization of the fluid part, reagent replenishment, pressure check, and drainage chamber discharge are performed. In cleaning the fluid part, the fluid part of the measurement module for measuring the sample is cleaned. The wait for temperature stabilization of the measurement module lasts until units such as the reaction chamber, reagent heater, and FCM detector heater reach the target temperature. In the background check, in order to confirm that the influence of the background has been eliminated by washing the fluid part, a blank measurement (measuring only the diluted solution without suctioning the sample) is performed under the same conditions as the normal sample measurement. Due to the start-up operation, it takes about 10 to 20 minutes from the power-on to the standby state where measurement is actually possible.

The blood cell counter also is shut down after the measurements of the day are completed and the flow path and the like are cleaned with a dedicated cleaning liquid. If the shutdown is not performed, the operation of an analysis controller such as a personal computer that analyzes the measured data becomes heavy, which may adversely affect the examination work.

In the embodiments described below, sample analysis systems 100, 100a and 100b incorporating a plurality of sample analyzers will be described as examples.

### First Embodiment

Hereinafter, an embodiment of the present invention will be described in detail.

### Summary of Sample Analysis System 100

First, the structure of the sample analysis system 100 according to the present invention will be described with reference to FIG. 1. FIG. 1 is a schematic diagram showing the structure of a sample analysis system 100 according to the present invention. Note that the flow of communication signals is indicated by broken-line arrows in FIG. 1..

The sample analysis system 100 shown in FIG. 1 includes a plurality of sample analyzers designated 40a (first sample analyzer), 40b (second sample analyzer), and 40c (third sample analyzer), and a start-up controller 1 that controls activation of the plurality of sample analyzers.

The start-up controller 1 is a computer that is communicably connected to the sample analyzers 40a, 40b, and 40c. The start-up controller 1 is communicably connected to the sample analyzers 40a, 40b, and 40c via the router 9 via a LAN (Local Area Network) cable or a wireless LAN. Note that although FIG. 1 shows a configuration in which the start-up controller 1 and a plurality of sample analyzers are connected via a router, the present invention is not limited to this configuration. The start-up controller 1 and the plurality of sample analyzers also may be directly connected.

The start-up controller 1 has a function of selecting some of a plurality of sample analyzers as start-up targets and transmitting a start-up command to the selected start-up target sample analyzer. Here, for example, a magic packet (registered trademark) may be applied as the start-up command. A magic packet is a data pattern that includes "FF: FF: FF: FF: FF: FF" followed by a data pattern in which the MAC address of the sample analyzer to be activated is repeated 16 times. Note that "FF: FF: FF: FF: FF: FF" is a destination indicating broadcast. The magic packet is transmitted as an Ethernet broadcast frame.

### Boot Controller 1 Structure

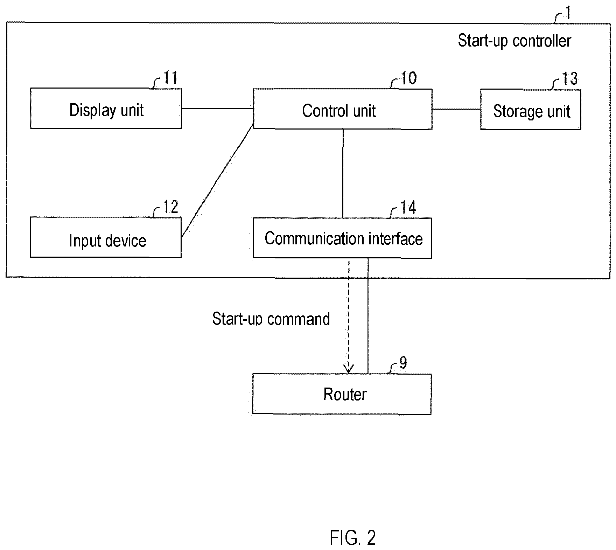

Next, an example of the structure of the start-up controller 1 will be described with reference to FIG. 2. FIG. 2 is a block diagram showing an outline of the structure of the start-up controller 1.

The start-up controller 1 is, for example, a personal computer that includes a control unit 10, a display unit 11, an input device 12, a storage unit 13, and a communication interface 14. The control unit 10 is a CPU that comprehensively controls various functions of the start-up controller 1. The storage unit 13 is a memory such as a ROM, a RAM, or a hard disk, for example. The display unit 11 is, for example, a liquid crystal display. The input device 12 is a keyboard and a mouse for inputting characters and the like. The display unit 11 and the input device 12 may be integrally configured by a touch panel display or the like.

The start-up controller 1 only needs to include the control unit 10, the storage unit 13, and the communication interface 14. For example, when the start-up controller 1 includes an HMDI terminal, it is possible to connect to a separate display (display device) via the HMDI terminal. When the start-up controller 1 includes a USB (Universal Serial Bus) terminal, it is possible to connect to a separate input device via the USB terminal.

The communication interface 14 is, for example, a communication interface based on the Ethernet (registered trademark) standard. The start-up controller 1 transmits a start-up command to any sample analyzer among the sample analyzers 40a, 40b, and 40c via the communication interface 14.

### Structure of Sample Analyzer 40a

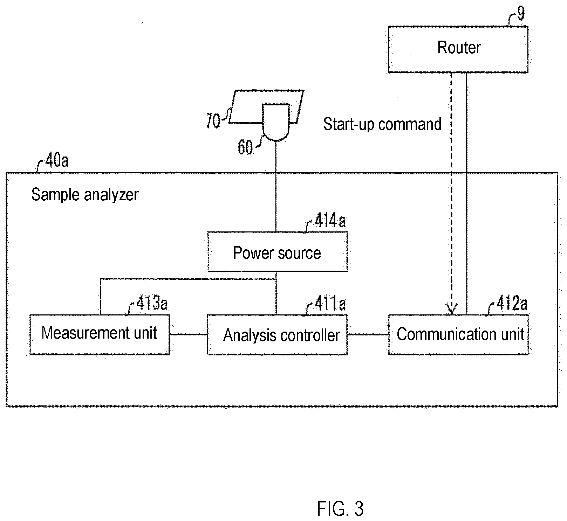

Next, the structure of the sample analyzer 40a will be described with reference to FIG. 3. FIG. 3 is a functional block diagram showing an example of the structure of the sample analyzer 40a. Each of the sample analyzers 40a, 40b, and 40c has a function as a sample analyzer by itself. That is, the structures of the sample analyzers 40b and 40c are the same as those of the sample analyzer 40a. Note that each sample analyzer may not be the same device, and may be a different sample analyzer such as a blood cell counter, a blood coagulation measuring device, an immuno analyzer, a biochemical analyzer, and a urine analyzer.

The sample analyzer 40a is integrally provided with an analysis controller 411a, a communication unit 412a, a measurement unit 413a, and a power source 414a connected to the outlet 70 via the plug 60. The analysis controller 411a includes, for example, a CPU mounted on the control board and a memory that stores a program processed by the CPU. The main power circuit of the sample analyzer 40a is mounted on the control board, and the analysis controller 411a controls the overall processing executed by the sample analyzer 40a and turns on/off the main power circuit of the sample analyzer 40a. The analysis controller 411a and the measurement unit 413a and the analysis controller 411a and the communication unit 412a are connected via an interface.

The communication unit 412a enables communication with the start-up controller 1. The communication unit 412a includes a communication interface based on the Ethernet standard, for example, and receives the start-up command transmitted from the start-up controller 1.

The communication unit 412a supports a WOL (Wake-On-LAN) function. That is, in the sample analyzer 40a, even when the main power supply circuit is OFF, the communication unit 412a is linked to the communication network and can receive the start-up command transmitted from the start-up controller 1.

The communication unit 412a checks whether the MAC address included in the received start-up command matches the MAC address of the communication interface included in the communication unit 412a. If the two match, the communication unit 412a determines that the received start-up command is addressed to itself. The communication unit 412a that has received the start-up command addressed to itself outputs a start-up signal to activate the analysis controller 411a.

When the analysis controller 411a receives the start-up signal from the communication unit 412a, the main power supply of the sample analyzer 40a is turned on, and each function on the control board can be operated. The analysis controller 411a and the measurement unit 413a are connected via a USB cable. The analysis controller 411a that has received the start-up signal controls the power supply 414a to start supplying power from the outlet 70 to the measurement unit 413a and the analysis controller 411a.

As described above, the start-up controller 1 can start one or more analyzers by transmitting a start-up command to a plurality of sample analyzers included in the sample analysis system 100.

### Second Embodiment

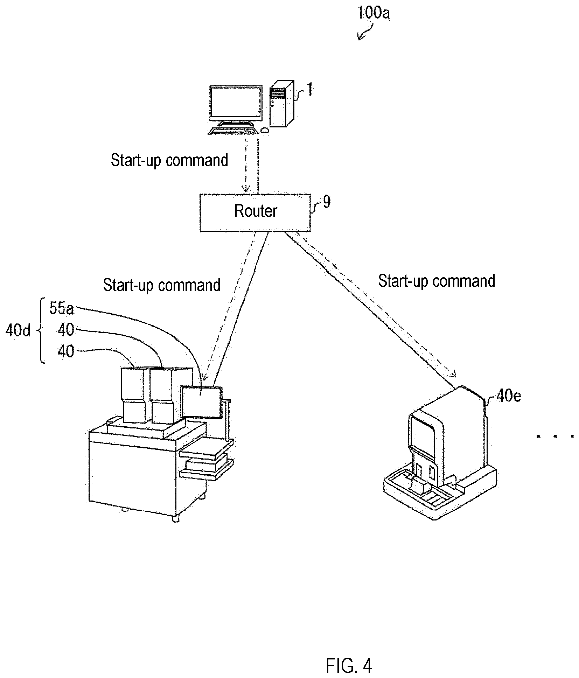

Hereinafter, another embodiment of the present invention will be described in detail with reference to FIG.4. Note that for convenience of explanation members having the same functions as those described in the above embodiment are given the same reference numerals, and the description thereof will not be repeated.

### Sample Analysis System 100a

The sample analysis system 100a according to the present embodiment includes a sample analyzer 40d and a sample analyzer 40e. Here, the sample analyzer 40d is different from the first embodiment in that it includes the analysis controller 55a and the plurality of measurement units 40 as separate devices. The start-up controller 1 can control activation of a plurality of sample analyzers including the sample analyzer 40d and the sample analyzer 40e.

The structure of the sample analysis system 100a will be described with reference to FIG. 4. FIG. 4 is a schematic diagram showing the structure of the sample analysis system 100a. As in FIG. 1, in FIG. 4, the flow of communication signals is indicated by broken-line arrows.

A sample analysis system 100a shown in FIG. 4 includes the sample analyzer 40d (first sample analyzer), sample analyzer 40e (second analyzer), and a start-up controller 1 for controlling the start-up of each of the sample analyzers 40d and sample analyzer 40e.

The start-up controller 1 is communicably connected to the sample analyzers 40d and 40e via a LAN cable or a wireless LAN. When the sample analyzer 40d and the sample analyzer 40e are connected to the same LAN, the start-up controller 1 has a function of transmitting a start-up command to the sample analyzers 40d and 40e.

### Structure of Sample Analyzer 40d

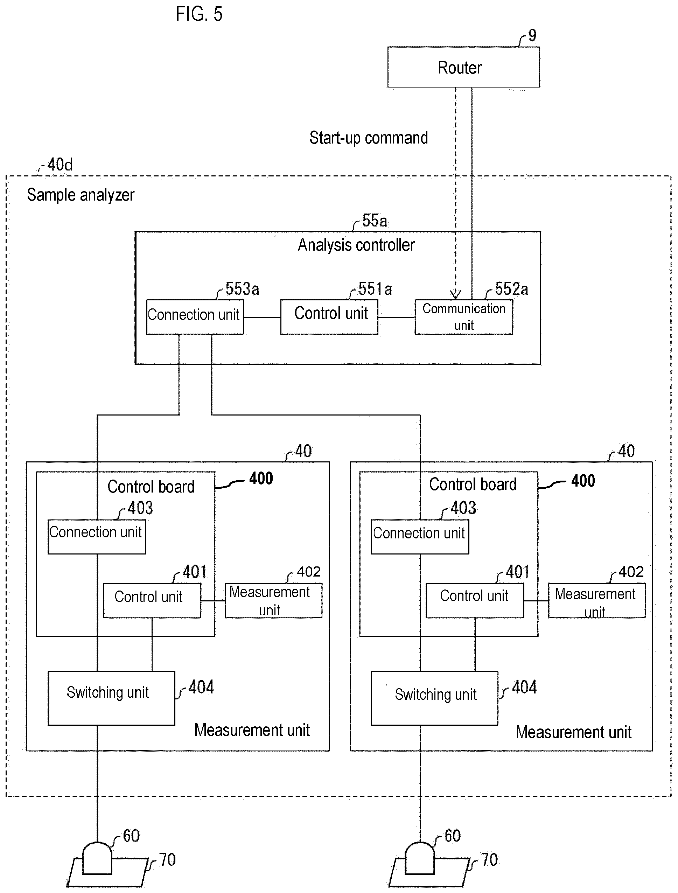

Next, the structure of the sample analyzer 40d will be described with reference to FIG. 5. FIG. 5 is a schematic diagram showing the structure of the sample analyzer 40d. Unlike the sample analyzer 40e which has a single function as a sample analyzer, the sample analyzer 40d controls both measurement units 40 and the operation of each measurement unit 40, and has a separate analysis controller 55a for acquiring and analyzing the measurement results.

The sample analyzer 40d includes an analysis controller 55a and a measurement unit 40. The measurement unit 40 performs various measurements using the sample and transmits the measurement results to the analysis controller 55a. The analysis controller 55a is a personal computer, for example. The analysis controller 55a includes a control unit 551a, a communication unit 552a, and a connection unit 553a including a data communication interface based on a bus standard such as USB. The analysis controller 55a receives the measurement data output from the measurement unit 40, generates an analysis result by analyzing the measurement data, such as creating a scattergram, and notifies the user of the analysis result.

The control unit 551a includes, for example, a CPU mounted on the control board and a memory that stores a program processed by the CPU. The control unit 551a controls the overall processing executed by the sample analyzer 40d and controls ON/OFF of the main power supply circuit of the analysis controller 55a.

The communication unit 552a enables communication with the start-up controller 1. The communication unit 552a includes, for example, a communication interface based on the Ethernet standard, and receives the start-up command transmitted from the start-up controller 1.

The communication unit 552a corresponds to the WOL function. That is, the start-up command transmitted from the start-up controller 1 can be received even when the main power circuit of the analysis controller 55a is OFF (that is, the measurement unit 40 is not activated).

The communication unit 552a checks whether the MAC address included in the received start-up command matches the MAC address of the communication interface provided in the communication unit 552a. If the two match, the communication unit 552a determines that the received start-up command is addressed to itself. The communication unit 552a that has received the start-up command addressed to itself outputs a start-up signal to activate the analysis controller 551a. Note that the communication unit 552a ignores a start-up command that is not addressed to itself.

The measurement unit 40 includes a control board 400 provided with a connection unit 403 connected to the analysis controller connection unit 553a via USB. The control board 400 also includes a control unit 401 that controls the operation of the measurement unit 402 provided in the measurement unit 40. The control unit 401 is a microcomputer, for example. The measurement unit 402 is a device for measuring a sample and includes, for example, a first detection unit for counting the number of cells such as red blood cells, white blood cells, and platelets in blood by a sheath flow DC (direct current) detection method, a second detection unit for classifying and counting cells by optical flow cytometry, and a third detection unit for measuring hemoglobin concentration by SLS-hemoglobin method. However, this is merely an example, and the measurement unit 402 included in the measurement unit 40 is not limited to this configuration.

The connection unit 403 and the control unit 401 of the measurement unit 40 are connected to the switching power supply 404. The switching power supply 404 is connected to the plug socket 70 through the plug 60. Here, the switching power supply 404 receives a signal from the connection unit 553 a (USB) of the activated analysis controller 551a, and turns on the output of the power supply. When the output of the power supply is turned on, a current from the power supply of the measurement unit 40 is supplied to the control board 400. When the current is supplied to the control board 400 and the control unit 401 provided on the control board 400, the measurement unit 402 becomes ready for measurement. In the present embodiment, this state is said to be that the measurement unit 40 has been activated, and that the sample analyzer 40d has been activated.

In this way, when the control unit 551a receives the start-up signal, the main power source of the sample analyzer 40d is turned on, and each function on the control board can be operated. Since the control unit 551a and each measurement unit 40 are connected by USB, a power supply to each measurement unit 40 is also started. Note that when the analysis controller 55a is shut down, the signal from the connection unit 553a (USB) disappears, the switching power supply 404 stops supplying electricity to the control board 400, and the measurement unit 40 and the sample analyzer 40d are stopped.

As described above, the start-up controller 1 can activate one or more sample analyzers by transmitting a start-up command to a plurality of sample analyzers included in the sample analysis system 100a.

### Third Embodiment

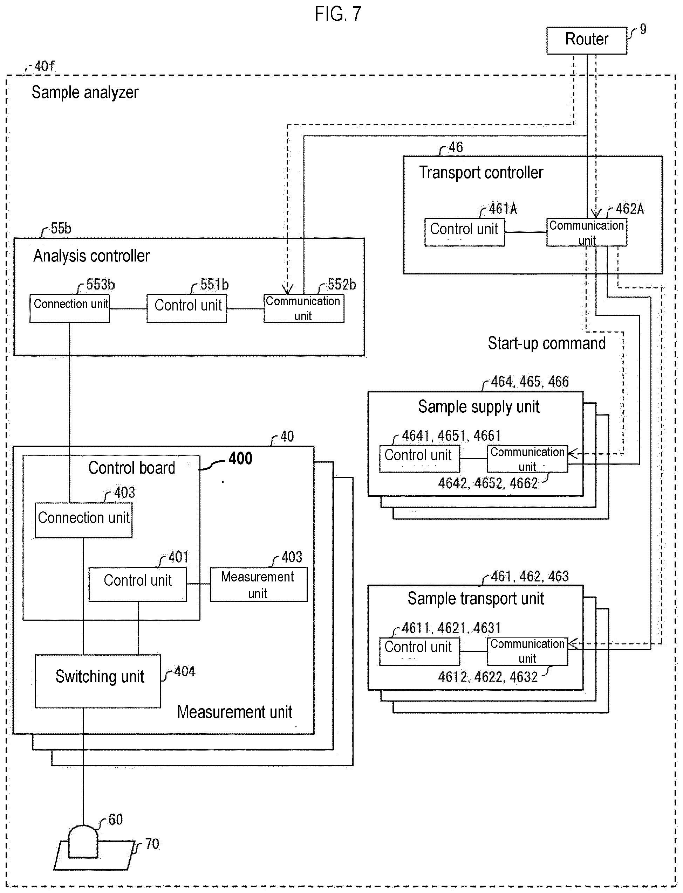

Hereinafter, another embodiment of the present invention will be described in detail with reference to FIG. 7. For convenience of explanation, members having the same functions as those described in the above embodiment are given the same reference numerals, and the description thereof is not repeated.

### Sample Analysis System 100b

The sample analysis system 100b includes a sample analyzer 40f. Here, the sample analyzers 40f and 40g include an analysis controller 55b, a plurality of measurement units 40A, 40B, and 40C, and a plurality of sample transport units 461, 462, and 463 that transport samples to the plurality of measurement units, respectively; the third embodiment differs from the first and second embodiments in that it is provided as a separate body. The start-up controller 1 can control activation of a plurality of sample analyzers including the sample analyzer 40f and the sample analyzer 40g.

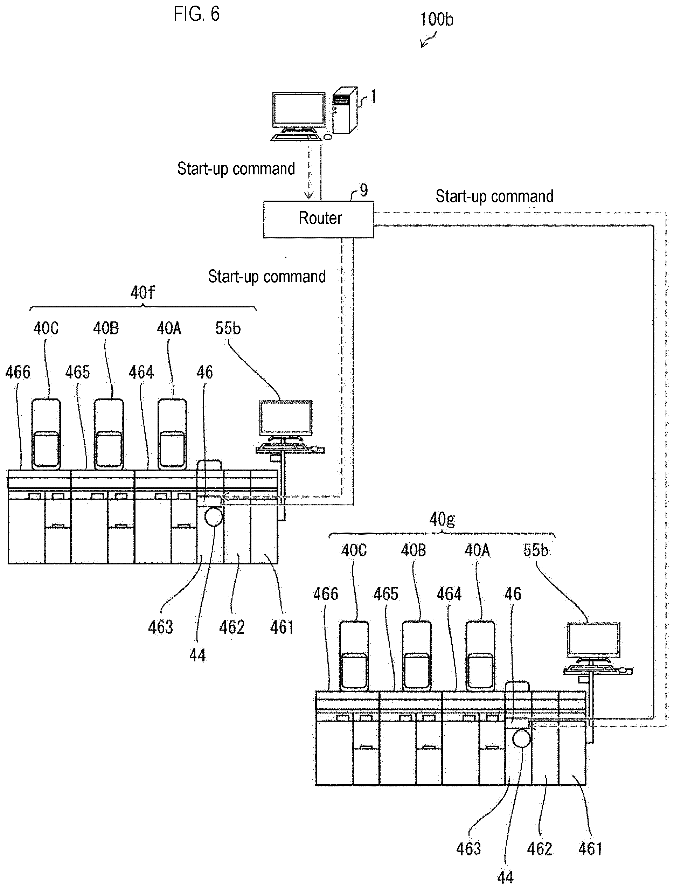

The structure of the sample analysis system 100b will be described with reference to FIG. 6. FIG. 6 is a schematic diagram illustrating a structural example of the sample analysis system 100b. Note that the flow of communication signals is indicated by broken-line arrows as in FIGS. 1 and 4.

The sample analysis system 100b shown in FIG. 6 includes sample analyzers 40f and 40g, and a start-up controller 1 for controlling the start-up of each of the sample analyzers 40f (first sample analyzer) and 40g (second sample analyzer).

The start-up controller 1 is communicably connected to the sample analyzers 40f and 40g via a LAN cable or a wireless LAN. The start-up controller 1 has a function of selecting some of a plurality of sample analyzers as start-up targets and transmitting a start-up command to the selected start-up target sample analyzer. Note that the sample analysis system 100b controls the activation of a sample analyzer (for example, the sample analyzer 40a shown in FIG. 1) having all functions as a sample analyzer alone, as in the above-described embodiment.

### Structure of Sample Analyzer 40f

Next, the structure of the sample analyzer 40f will be described with reference to FIG. 7. FIG. 7 is a schematic diagram showing the structure of the sample analyzer 40f. Although, the sample analyzer 40f having three measurement units will be described here as an example, the number of measurement units is not limited to this configuration.

The sample analyzer 40f includes an analysis controller 55b, measurement units 40A, 40B, and 40C, sample supply units 464, 465, and 466, sample transport units 461, 462, and 463 that transport samples, and a transport controller 46.

### Transport Controller 46

The transport controller 46 is a computer that controls the operations of the sample transport units 461, 462, and 463 and the sample supply units 464, 465, and 466. The transport controller 46 includes a control unit 461A, a communication unit 462A, and a hard disk 463A.

The control unit 461A includes a CPU and a memory that stores a program processed by the CPU. The control unit 461A communicates with the plurality of sample transport units 461, 462, and 463, the plurality of sample supply units 464, 465, and 466, and the analysis controller 55b via the communication unit 462A. The control unit 461A controls the sample transport units 461, 462, 463 and the sample supply units 464, 465, and 466 based on the position information of the sample rack R stored in the hard disk 463A and the transport destination of the sample rack R.

The communication unit 462A also enables communication with the start-up controller 1. The communication unit 462A includes, for example, a communication interface based on the Ethernet standard, and receives the start-up command transmitted from the start-up controller 1.

The communication unit 462A corresponds to the WOL function. That is, even when the main power supply circuit of the sample analyzer 40f is OFF (that is, the analysis controller 55b is not activated), the communication unit 462A is linked to the communication network and a start-up command transmitted from the start-up controller 1 can be received.

The communication unit 462A checks whether the MAC address included in the received start-up command matches the MAC address of the communication interface included in the communication unit 462A. If the two match, the communication unit 462A determines that the received start-up command is addressed to itself. The communication unit 462A that has received the start-up command addressed to itself generates a start-up command including the MAC address of the communication interface included in each of the communication units of the sample transport units 461, 462, and 463 and the sample supply units 464, 465, and 466, and the start-up commands are transmitted to the communication units of the sample transport units 461, 462, and 463 and the sample supply units 464, 465, and 466, respectively.

### Analysis Controller 55b

The analysis controller 55b is a computer that acquires and analyzes the measurement results in the measurement units 40A, 40B, and 40C. The analysis controller 55b includes a control unit 551b, a communication unit 552b, and a connection unit 553b including a data communication interface based on a bus standard such as USB. Each of the measurement units 40A, 40B, and 40C is the same as the measurement unit 40 of the sample analyzer 40d.

The control unit 551b is, for example, a CPU mounted on the control board. The control unit 551b controls the overall processing executed by the sample analyzer 40f and controls ON/OFF of the main power supply circuit of the analysis controller 55b.

The communication unit 552b checks whether the MAC address included in the start-up command received from the start-up controller 1 via the router 9 matches the MAC address of the communication interface included in the communication unit 552b. If the two match, the communication unit 552b determines that the received start-up command is addressed to itself. The communication unit 552b that has received the start-up command addressed to itself outputs a start-up signal to activate the control unit 551b.

The measurement unit 40 includes a control board 400 provided with a connection unit 403 connected to the analysis controller connection unit 553b via USB. The control board 400 also includes a control unit 401 that controls the operation of the measurement unit 402 provided in the measurement unit 40. The control unit 401 is a microcomputer, for example. The measurement unit 402 is a device for measuring a sample and includes, for example, a first detection unit for counting the number of cells such as red blood cells, white blood cells, and platelets in blood by a sheath flow DC (direct current) detection method, a second detection unit for classifying and counting cells by optical flow cytometry, and a third detection unit for measuring hemoglobin concentration by SLS-hemoglobin method. However, this is merely an example, and the measurement unit 402 included in the measurement unit 40 is not limited to this configuration.

The connection unit 403 and the control unit 401 of the measurement unit 40 are connected to the switching power supply 404. The switching power supply 404 is connected to the plug socket 70 through the plug 60. Here, the switching power supply 404 receives a signal from the connection unit 553b (USB) of the activated analysis controller 551b and turns on the output of the power supply. When the output of the power supply is turned on, a current from the power supply of the measurement unit 40 is supplied to the control board 400. When the current is supplied to the control board 400 and the control unit 401 provided on the control board 400, the measurement unit 402 becomes ready for measurement. In the present embodiment, this state is referred to as the measurement unit 40 being activated, and the sample analyzer 40f being activated.

In this way when the transfer controller 46 receives the start-up signal, the main power source of the sample analyzer 40f is turned on, and each function on the control board can be operated. Since the control unit 551b and each measurement unit 40 are connected by USB, power supply to each measurement unit 40 is also started. Note that when the analysis controller 55b is shut down, there is no signal from the connection unit 553b (USB), the switching power supply 404 stops supplying electricity to the control board 400, and the measurement unit 40 and the sample analyzer 40f are stopped.

### Sample Transport Units 461, 462, 463

Each of the sample transport units 461, 462, and 463 includes a control unit and a communication unit. For example, in the sample transport unit 461, the control unit 4611 is a CPU that controls the operation of the sample transport unit 461. The communication unit 4612 enables communication with the communication unit 462A of the transport controller 46.

The communication units 4612, 4622, and 4632 include a communication interface based on the Ethernet standard, and receive a start-up command transmitted from the communication unit 462A of the transport controller 46.

The communication units 4612, 4622, and 4632 correspond to the WOL function, and can receive the start-up command transmitted from the communication unit 462A even when the main power supply circuit of the sample analyzer 40f is OFF.

The communication units 4612, 4622, and 4632 check whether the MAC address included in the received start-up command matches the MAC address of the communication interface included in each of the communication units 4612, 4622, and 4632. If the two match, the communication units 4612, 4622, and 4632 determine that the received start-up command is addressed to themselves. The communication units 4612, 4622, and 4632 that have received the start-up command addressed thereto output start-up signals and activate the control units 4611, 4621, and 4631, respectively. That is, the sample transport units 461, 462, and 463 are activated in response to a start-up command from the transport controller 46.

Each of the sample transport units 461, 462, and 463 includes a transport path for transporting the sample. For example, the sample transport unit 461 has a function as a collection unit for the sample rack R that has been measured by the measurement unit, the sample transport unit 462 has a function as a loading unit for loading the sample rack R before measurement, the sample transport unit 463 has a function as a preprocessing unit that performs preprocessing such as reading the barcode of the sample container placed on the sample rack R. The sample transport units 461, 462, and 463 are arranged adjacent to each other so that the sample rack R can be transferred. These units also are configured so that a plurality of sample racks R capable of holding ten sample containers can be placed.

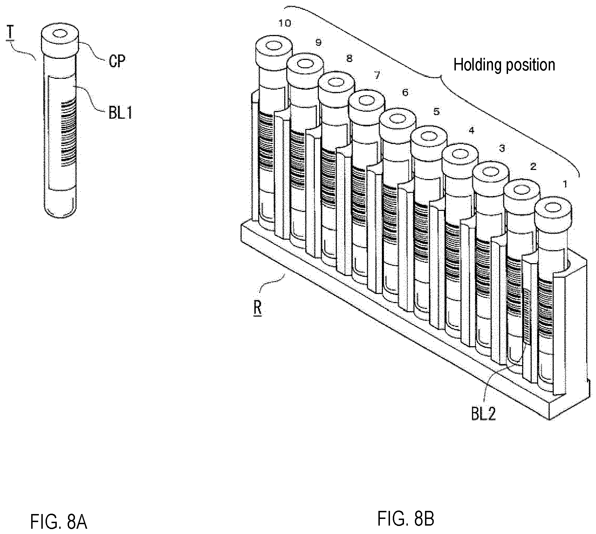

Here, the sample container T and the sample rack R will be described with reference to FIG. 8A and FIG. 8B. FIG. 8A is a perspective view showing the appearance of the sample container T, and FIG. 8B is a perspective view showing the appearance of the sample rack R holding ten sample containers T.

As shown in FIG. 8A, the sample container T is a tubular container made of translucent glass or synthetic resin, and has an open upper end. A blood sample collected from the patient is accommodated inside, and the opening at the upper end is sealed by a cover CP. A barcode label BL1 is attached to the side surface of the sample container T. A barcode indicating the sample ID is printed on the barcode label BL1.

As shown in FIG. 8B, ten sample containers T are held in the holding positions 1 to 10 in the sample rack R so that ten sample containers T can be held in a vertically upright state. A barcode label BL2 is attached to the rear side surface of the sample rack R. A barcode indicating the rack ID is printed on the barcode label BL2.

Returning to FIG. 7, the sample transport unit 461 is a collection unit for collecting the sample that has been measured in each measurement unit. The sample transport unit 462 is a loading unit that places a sample rack R containing a sample to be measured on the user. The sample rack R placed on the sample transport unit 462 is transported to each measurement unit. The sample transport unit 463 reads the barcode label BL2 attached to the sample rack R transported from the sample transport unit 462 and the barcode label BL1 attached to each sample container T, and transmits the barcode label BL1 to the transport controller 46.

### Sample Supply Units 464 to 466

Each of the sample supply units 464 to 466 includes a transport path for supplying the sample rack R to the measurement units 402A, 402B, and 402C of each measurement unit. Each of the sample supply units 464, 465, and 466 includes a control unit and a communication unit. For example, in the sample supply unit 464, the control unit 4641 is a CPU that controls the operation of the sample supply unit 464. The communication unit 4642 enables communication with the communication unit 462A of the transport controller 46.

The communication units 4642, 4652, and 4662 include a communication interface based on the Ethernet standard, for example, and receive a start-up command transmitted from the communication unit 462A of the transport controller 46.

The communication units 4642, 4652, and 4662 are compatible with the WOL function, and can receive a start-up command transmitted from the communication unit 462A even when the main power supply circuit of the sample analyzer 40f is OFF.

The communication units 4642 to 4661 checks whether the MAC address included in the received start-up command matches the MAC address of the communication interface included in each of the communication units 4642 to 4661. If the two match, the communication units 4642, 4652, and 4662 determine that the received start-up command is addressed to itself. Receiving the start-up command addressed to itself, the communication units 4642, 4652, and 4662 output start-up signals to activate the control units 4641, 4651, and 4661, respectively. That is, the sample supply units 464, 465, and 466 are activated in response to a start-up command from the transport controller 46.

The communication units 4642, 4652, and 4662 that have received the start-up command addressed thereto also generate a start-up command including the communication interface MAC address included in the communication unit 552b of the analysis controller 55b, and transmit the start-up command to the communication unit 552b.

As described above, the start-up controller 1 can activate one or a plurality of analyzers by transmitting a start-up command to a plurality of analyzers included in the sample analysis system 100b.

### Operation of Start-up Controller

In the sample analysis systems 100, 100a, and 100b, the start-up controller 1 sets a combination of sample analysis devices to be activated among a plurality of sample analysis devices included in the system, and activates the sample analysis devices included in the combination. The start-up controller 1 can also activate only the sample analyzers included in the combination of sample analyzers to be activated at a predetermined date and time. Note that in the following description the "sample analyzer" may be a sample analyzer that can be activated by a start-up command.

Hereinafter, the start-up controller 1 that can set the combination of the analysis apparatuses to be activated and the date and time of activation in the first, second, and third embodiments will be described in detail.

### Processing Performed by the Start-up Controller 1

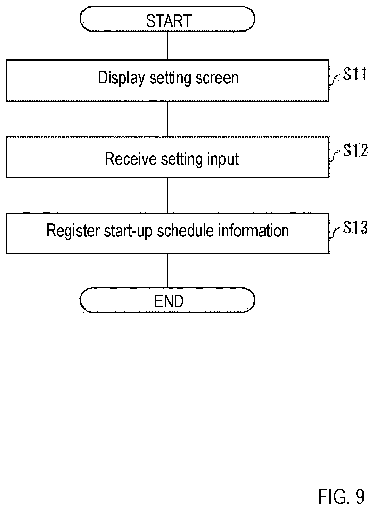

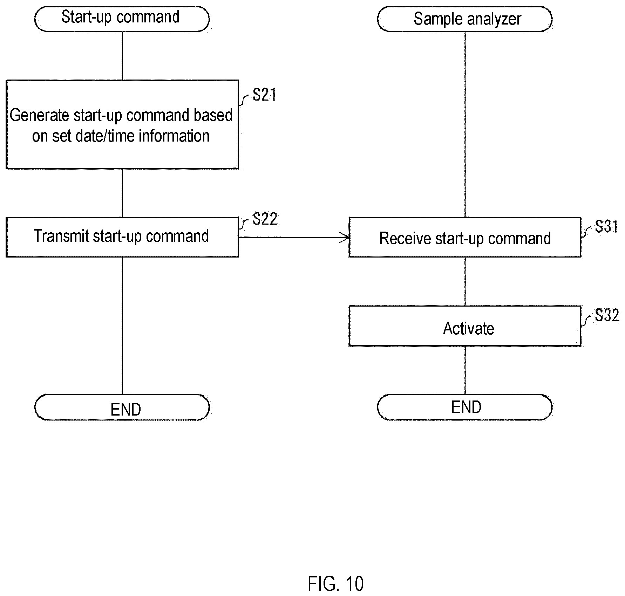

First, processing performed by the start-up controller 1 will be described with reference to FIGS. 9 and 10. FIG. 9 is a flowchart showing a flow of processing in which the start-up controller 1 registers the activation schedule information 132 in the storage unit 13. FIG. 10 is a flowchart showing a flow of processing in which the start-up controller 1 generates and transmits a start-up command and activates the sample analyzer to be started.

The start-up controller 1 includes a control unit 10, a display unit 11, an input device 12, and a storage unit 13, as shown in FIG. 2.

The storage unit 13 stores a start control application program and start schedule information 132.

First, the control unit 10 executes the start-up control application program, and causes the display unit 11 to display a setting screen for allowing the user to set the sample analyzer to be activated and the date and time when the sample analyzer is activated. (Step S11 in FIG. 9). This setting screen includes information indicating the analysis device to be activated and display the time at which the analysis device is activated in association with the calendar date. Note that the setting screen will be described later with a specific example. The start-up controller 1 receives a setting input by the user (step S12 in FIG. 9). Here, the setting input is intended to be input by the user as to the setting of the combination of the sample analyzers to be activated and the setting of the date and time to activate the start-up target sample analyzer.

Next, the control unit 10 associates the start-up target sample analyzer and date/time information indicating the start-up date/time of the start-up target sample analyzer, and registers these data in the storage unit 13 as start-up schedule information 132 (Step S13 of FIG. 9, registration step). The control unit 10 updates the start-up schedule information 132 when the date and time information of the set start-up schedule and the sample analyzer to be activated are canceled or changed.

The control unit 10 generates a start-up command based on the date/time information set in the start-up schedule information 132 (step S21 in FIG. 10). The start-up command is a command for instructing the activation of the start-up target sample analyzer. The start-up command is the magic packet described above. For example, when starting the start-up target sample analyzer at AM 8:00 on Monday, the AM of the start-up target sample analyzer is followed by "FF: FF: FF: FF: FF: FF" at AM 8:00 on Monday, and a packet having a data pattern in which the MAC address is repeated 16 times is included somewhere in the payload and transmitted to the start-up target sample analyzer. Here, the date and time information includes "start-up schedule (day)" and "start-up schedule (time)". "Start-up schedule (day)" is information for specifying the date for starting the start-up target sample analyzer, and "Start-up schedule (time)" is information for specifying the time for starting the start-up target sample analyzer.

Next, the control unit 10 transmits the generated start-up command at the time indicated by the date and time information registered in the start-up schedule information 132 (step S22 in FIG. 10; activation command transmission step).

When the communication unit of the start-up target sample analyzer receives the start-up command from the start-up controller 1 via the router 9 (step S31), the MAC address included in the received start-up command and the MAC address of the communication interface provided by itself are obtained; when the MAC addresses match, the communication unit of the start-up target sample analyzer determines that the received start-up command is addressed to itself. The communication unit of the start-up target sample analyzer that has received the start-up command addressed to itself outputs a start-up signal to the control unit, and activates the control unit (step S32).

In this way the start-up target sample analyzer can be set to start the start-up target sample analyzer at the set date and time.

### Start-up Schedule Information 132

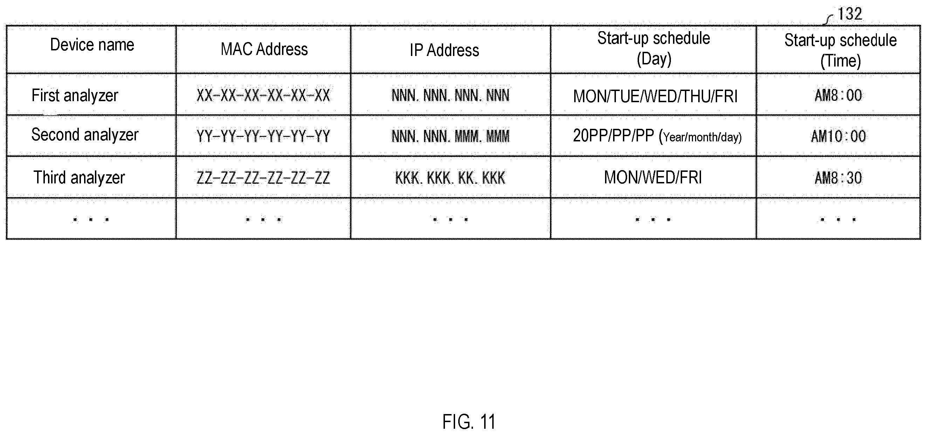

FIG. 11 is a diagram illustrating an example of the start-up schedule information 132 stored in the storage unit 13. The start-up schedule information includes the name of the start-up target analysis device, the MAC address and IP address of a predetermined communication interface that can start the analysis device by receiving the start-up command, and date/time information for starting the analysis device. The date/time information includes "start-up schedule (day)" and "start-up schedule (time)". "Start-up schedule (day)" is information for specifying the date for starting the start-up target sample analyzer, and "Start-up schedule (time)" is information for specifying the time for starting the start-up target sample analyzer.

In the example shown in FIG. 11, the "first analyzer" is set to be started at 8:00 am from Monday to Friday, and the "second analyzer" is set to start at 10:00 am on PP day, PP month, 20PP year. The "third analyzer" is set to be started at 8:30 am on Monday, Wednesday, and Friday.

The start-up command transmitted at the date and time set in the start-up schedule information 132 generated by the control unit 10. The control unit 10 generates a start-up command to be transmitted to the start-up target sample analyzer using the MAC address and the IP address corresponding to the start-up target sample analyzer.

### Setting Screen

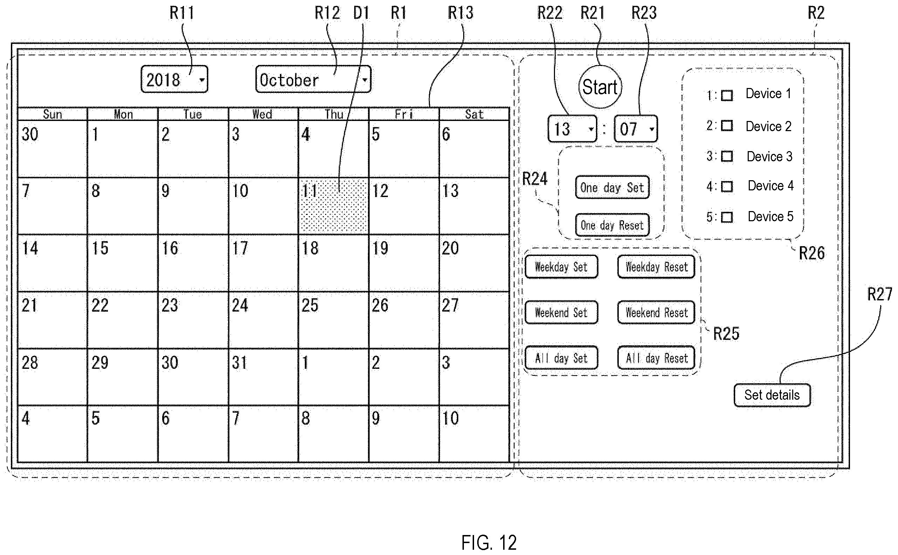

Next, a setting screen for allowing the user to input the start-up target sample analyzer and the date and time for starting each analysis device will be described with reference to FIGS. 12 to 15.

The setting screen shown in FIG. 12 includes an area R1 for displaying a calendar showing a date, and an area R2 for inputting the setting of an analysis device to be activated and a date and time for starting the analysis device.

In addition to the calendar display R13, the area R1 includes calendar designation displays R11 and R12 for selecting the calendar year and month to be displayed.

The calendar display R13 accepts date selection by the user. For example, the example shown in FIG. 12 shows an area D1 indicating October 11 is selected in the calendar for October 2018. The selected date is displayed in a different manner such as changing the color and adding a frame to the date that has not been selected.

The region R2 includes a start button R21, time displays R22 and R23, a daily setting menu display R24, a monthly setting menu display R25, a device selection display R26, and a detailed setting button R27.

The start button R21 is a button for starting the start-up target sample analyzer without setting the start-up date and time. When the start button R21 is pressed, a start-up command is immediately transmitted to the sample analyzer selected in the device selection display R26. The sample analyzer to which the start-up command has been transmitted is started immediately according to this start-up command.

The time displays R22 and R23 are displays for inputting a time setting for starting the sample analyzer. In the time displays R22 and R23 before the time is set, the current time (for example, "13:07") or a predetermined time such as "00:00" is displayed.

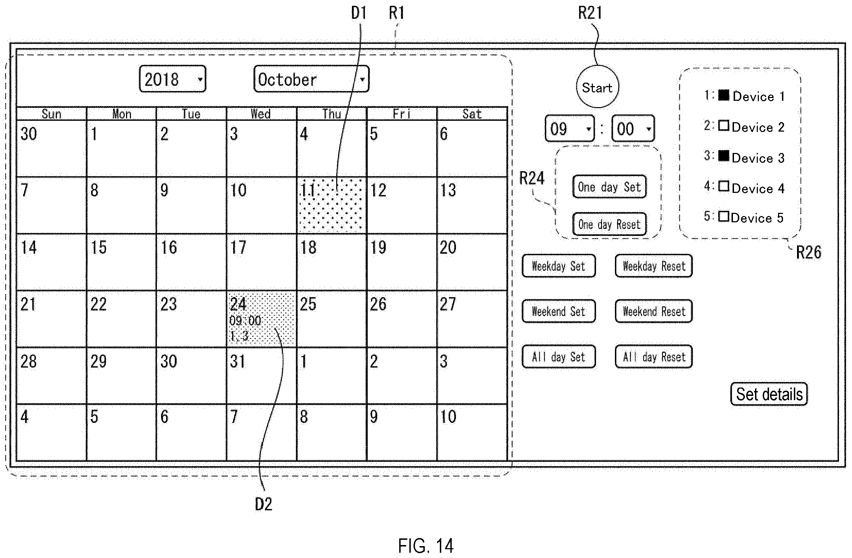

The daily setting menu display R24 includes a button for setting the start-up time on the day selected in the calendar display. For example, the "One day Set" button shown in the figure is a button for accepting input of settings on the selected date, and the "One day Reset" button is a button for accepting an instruction to delete (cancel) the settings on the selected date. Anew start-up schedule can be registered by selecting the date in the calendar display, checking the start-up target sample analyzer in the device selection display R26, and pressing the "One day Set" button with the start-up time specified in the time displays R22 and R23. FIG. 14 shows a setting screen in which settings for starting the devices 1 and 3 at 9:00 am on October 24, 2018 are input.

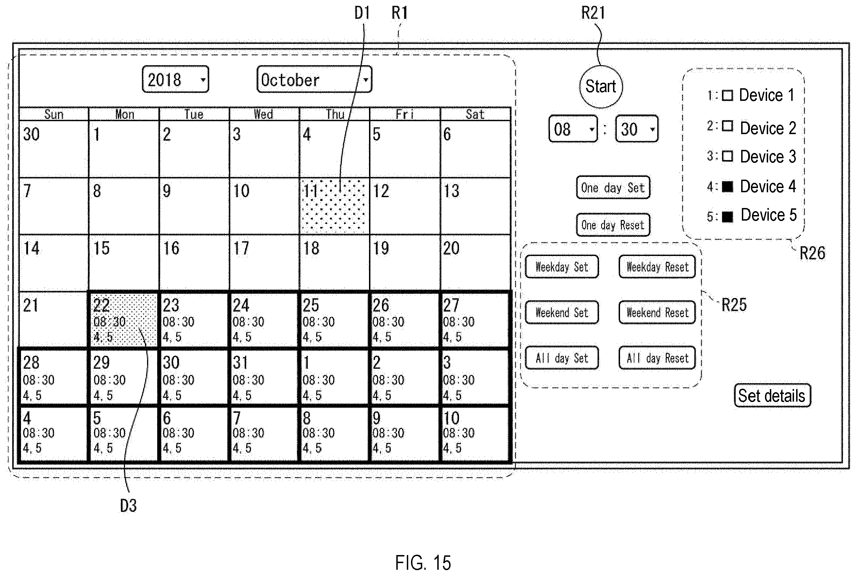

The month setting menu display R25 is for setting the start-up time for each month in a batch. Specifically, the monthly setting menu display R25 includes a menu button for collectively setting start-up times of the month selected in the calendar display after the selected date. For example, the "Weekday Set" button shown in the figure is a button for accepting input of settings on a weekday (for example, Monday to Friday) after the selected date, and the "Weekend Set" button is a weekend on and after the selected date. It is a button for accepting input of settings on holidays. The "All day Set" button is a button for accepting input of settings for all days after the selected date. The "Weekday Reset" button, "Weekend Reset" button, and "All day Reset" button respectively accept weekday setting deletion instructions, weekend and holiday setting deletion instructions, and all day setting deletion instructions. FIG. 15 shows a setting screen in which settings for starting the devices 4 and 5 after 8/22/18 (area D3 in the figure is selected) every day at 8:30 in the morning are input.

The device selection display R26 includes a GUI for causing some of the plurality of analysis devices included in the sample analysis systems 100 to 100b to be selected as start-up targets. In the example shown in FIG. 12, a check column is provided to the left of the names of the analysis devices included in the sample analysis systems 100 to 100b, and allows the user to select a combination of analysis devices to be activated.

The detail setting button R27 is a button for making a transition to the detail setting screen.

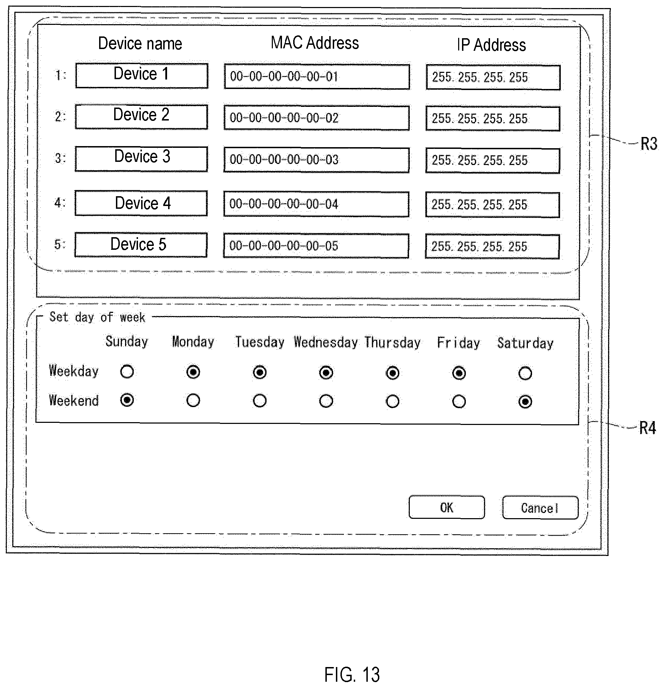

Next, a detailed setting screen displayed when the detailed setting button R27 shown in FIG. 12 is pressed will be described with reference to FIG. 13. The detailed setting screen includes an input field R3 for registering a start-up target sample analyzer to be displayed on the device selection display R26, and a field R4 for setting weekdays and weekend days used in the monthly setting menu display R25.

The input column R3 is a column for inputting the name of the start-up target analysis device, the MAC address and IP address of the communication interface that is the destination of the start-up command transmitted to start each analysis device.

The column R4 is a column for setting weekdays, weekends, and holidays in one week in the "Weekday Set" button, the "Weekend Set" button, and the like. In the example shown in FIG. 13, Monday through Friday are set as weekdays, and Saturday and Sunday are set as weekends and holidays.

The present invention is not limited to the above-described embodiments, and various modifications can be made within the scope of the claims by appropriately combining technical means disclosed in the different embodiments, and these modifications are further included in the technical scope of the present invention.

## Claims

1. A sample analysis system (100 to 100b) comprising:
a plurality of sample analyzers (40a to 40g) for measuring samples;
a controller (1) that is communicably connected to the plurality of sample analyzers (40a to 40g) and that is configured to control start-up of the plurality of sample analyzers (40a to 40g);
wherein the controller (1) is configured to start-up a combination of sample analyzers among some of the plurality of sample analyzers (40a to 40g);
the sample analyzer performs an initial operation after start-up; and
the initial operation includes at least a cleaning operation and a background check of a measurement unit that measures a sample.

2. The sample analysis system (100 to 100b) according to claim 1, wherein
the controller (1) is configured to receive start-up time settings for each of the plurality of sample analyzers (40a to 40g).

3. The sample analysis system (100 to 100b) according to claim 1 or 2, wherein
the controller (1) is configured to receive different start-up time settings for each of the plurality of sample analyzers (40a to 40g).

4. The sample analysis system (100 to 100b) according to any one of claims 1 to 3, wherein
the sample analyzer comprises a control board for controlling a measurement unit that measures a sample; and
electricity is supplied to the control board at start-up of the sample analyzer.

5. The sample analysis system (100 to 100b) according to any one of claims 1 to 4, wherein
the controller (1) comprises a storage unit that stores information related to a start-up time of the sample analyzer in association with information specifying the sample analyzer.

6. The sample analysis system (100 to 100b) according to claim 5, wherein
the storage unit stores day/time information as the information related to the start-up time of the sample analyzer; and
the controller (1) is configured to start up the sample analyzer based on the date/time information stored in the storage unit.

7. The sample analysis system (100 to 100b) according to any one of claims 1 to 6, wherein
the controller (1) is configured to collectively receive start-up time settings for a plurality of days regarding at least one of a weekday, a holiday, or a weekend.

8. The sample analysis system (100 to 100b) according to any one of claims 1 to 7, wherein
the sample analyzer comprises: a measurement unit that measures a sample; and a control unit that analyzes measurement data output from the measurement unit.

9. The sample analysis system (100 to 100b) according to claim 8, wherein
the controller (1) is configured to transmit a command instructing start-up to the control unit.

10. The sample analysis system (100 to 100b) according to any one of claims 1 to 9, wherein
the controller (1) comprises a display unit; and
the controller (1) is configured to cause the display unit to display a calendar in which information specifying the sample analyzer and information regarding a start-up time are displayed in association with a date of the calendar.

11. The sample analysis system (100 to 100b) according to any one of claims 1 to 10, wherein
the controller (1) is configured to receive an instruction to immediately start up sample analyzers among the plurality of sample analyzers (40a to 40g).

12. A start-up method for starting up a plurality of sample analyzers (40a to 40g) for measuring samples, the start-up method comprising:
receiving a combination of sample analyzers among the plurality of sample analyzers (40a to 40g); and
starting up the combination of sample analyzers among some of the plurality of sample analyzers (40a to 40g);
wherein
the sample analyzer performs an initial operation after start-up; and
the initial operation includes at least a cleaning operation and a background check of a measurement unit that measures a sample.

13. A non-transitory storage medium storing a computer program executable by a computer to perform operations comprising:
receiving a combination of sample analyzers among a plurality of sample analyzers (40a to 40g) for measuring samples; and
starting up the combination of sample analyzers among some of the plurality of sample analyzers (40a to 40g);
wherein
the sample analyzer performs an initial operation after start-up; and
the initial operation includes at least a cleaning operation and a background check of a measurement unit that measures a sample.

## Patentansprüche

1. Probenanalysesystem (100 bis 100b), das Folgendes umfasst:
eine Vielzahl von Probenanalysatoren (40a bis 40g) zur Messung von Proben;
eine Steuereinrichtung (1), die kommunikativ mit der Vielzahl von Probenanalysatoren (40a bis 40g) verbunden ist und die so konfiguriert ist, dass sie den Start der Vielzahl von Probenanalysatoren (40a bis 40g) steuert;
wobei die Steuereinrichtung (1) so konfiguriert ist, dass sie eine Kombination von Probenanalysatoren unter einigen der Vielzahl von Probenanalysatoren (40a bis 40g) startet;
der Probenanalysator nach dem Starten einen Anfangsvorgang ausführt; und
der Anfangsvorgang mindestens einen Reinigungsvorgang und eine Hintergrundprüfung einer Messeinheit umfasst, die eine Probe misst.

2. Probenanalysesystem (100 bis 100b) nach Anspruch 1, wobei
die Steuereinrichtung (1) so konfiguriert ist, dass sie Startzeiteinstellungen für jeden der Vielzahl von Probenanalysatoren (40a bis 40g) empfängt.

3. Probenanalysesystem (100 bis 100b) nach Anspruch 1 oder 2, wobei
die Steuereinrichtung (1) so konfiguriert ist, dass sie unterschiedliche Startzeiteinstellungen für jeden der Vielzahl von Probenanalysatoren (40a bis 40g) empfängt.

4. Probenanalysesystem (100 bis 100b) nach einem der Ansprüche 1 bis 3, wobei
der Probenanalysator eine Steuerplatine zur Steuerung einer Messeinheit umfasst, die eine Probe misst; und
die Steuerplatine beim Starten des Probenanalysators mit Strom versorgt wird.

5. Probenanalysesystem (100 bis 100b) nach einem der Ansprüche 1 bis 4, wobei
die Steuereinrichtung (1) eine Speichereinheit umfasst, die Informationen in Bezug auf eine Startzeit des Probenanalysators in Verbindung mit Informationen speichert, die den Probenanalysator spezifizieren.

6. Probenanalysesystem (100 bis 100b) nach Anspruch 5, wobei
die Speichereinheit Datum-/Uhrzeitinformationen als die Informationen speichert, die sich auf die Startzeit des Probenanalysators beziehen; und
die Steuereinrichtung (1) so konfiguriert ist, dass sie den Probenanalysator auf der Grundlage der in der Speichereinheit gespeicherten Datum-/Uhrzeitinformationen startet.

7. Probenanalysesystem (100 bis 100b) nach einem der Ansprüche 1 bis 6, wobei
die Steuereinrichtung (1) so konfiguriert ist, dass sie kollektiv Startzeiteinstellungen für eine Vielzahl von Tagen empfängt, die mindestens einen Wochentag, einen Feiertag oder ein Wochenende betreffen.

8. Probenanalysesystem (100 bis 100b) nach einem der Ansprüche 1 bis 7, wobei
der Probenanalysator Folgendes umfasst: eine Messeinheit, die eine Probe misst; und eine Steuereinheit, die die von der Messeinheit ausgegebenen Messdaten analysiert.

9. Probenanalysesystem (100 bis 100b) nach Anspruch 8, wobei die Steuereinrichtung (1) so konfiguriert ist, dass sie einen Befehl zum Starten an die Steuereinheit übermittelt.

10. Probenanalysesystem (100 bis 100b) nach einem der Ansprüche 1 bis 9, wobei
die Steuereinrichtung (1) eine Anzeigeeinheit umfasst; und
die Steuereinrichtung (1) so konfiguriert ist, dass sie die Anzeigeeinheit veranlasst, einen Kalender anzuzeigen, in dem Informationen, die den Probenanalysator spezifizieren, und Informationen bezüglich einer Startzeit in Verbindung mit einem Datum des Kalenders angezeigt werden.

11. Probenanalysesystem (100 bis 100b) nach einem der Ansprüche 1 bis 10, wobei
die Steuereinrichtung (1) so konfiguriert ist, dass sie eine Anweisung zum sofortigen Starten von Probenanalysatoren unter der Vielzahl von Probenanalysatoren (40a bis 40g) empfängt.

12. Startverfahren zum Starten einer Vielzahl von Probenanalysatoren (40a bis 40g) zum Messen von Proben, wobei das Startverfahren Folgendes umfasst:
Empfangen einer Kombination von Probenanalysatoren unter der Vielzahl von Probenanalysatoren (40a bis 40g); und
Starten der Kombination von Probenanalysatoren unter einigen aus der Vielzahl von Probenanalysatoren (40a bis 40g);
wobei
der Probenanalysator nach dem Starten einen Anfangsvorgang durchführt; und
der Anfangsvorgang mindestens einen Reinigungsvorgang und eine Hintergrundprüfung einer Messeinheit umfasst, die eine Probe misst.

13. Nicht-transitorisches Speichermedium, das ein Computerprogramm speichert, das von einem Computer ausgeführt werden kann, um Vorgänge auszuführen, die Folgendes umfassen:
Empfangen einer Kombination von Probenanalysatoren unter einer Vielzahl von Probenanalysatoren (40a bis 40g) zum Messen von Proben; und
Starten der Kombination von Probenanalysatoren unter einigen aus der Vielzahl von Probenanalysatoren (40a bis 40g);
wobei
der Probenanalysator nach dem Starten einen Anfangsvorgang durchführt; und
der Anfangsvorgang mindestens einen Reinigungsvorgang und eine Hintergrundprüfung einer Messeinheit umfasst, die eine Probe misst.

## Revendications

1. Système d'analyse d'échantillons (100 à 100b), comprenant :
une pluralité d'analyseurs d'échantillons (40a à 40g) pour mesurer des échantillons ;
un organe de commande (1) qui est connecté en communication avec la pluralité d'analyseurs d'échantillons (40a à 40g) et qui est configuré pour commander le démarrage de la pluralité d'analyseurs d'échantillons (40a à 40g) ;
dans lequel l'organe de commande (1) est configuré pour démarrer une combinaison d'analyseurs d'échantillons parmi certains de la pluralité d'analyseurs d'échantillons (40a à 40g) ;
l'analyseur d'échantillons met en oeuvre une opération initiale après le démarrage ; et
l'opération initiale inclut au moins une opération de nettoyage et une vérification des antécédents d'une unité de mesure qui mesure un échantillon.

2. Système d'analyse d'échantillons (100 à 100b) selon la revendication 1, dans lequel
l'organe de commande (1) est configuré pour recevoir des réglages de temps de démarrage pour chacun de la pluralité d'analyseurs d'échantillons (40a à 40g).

3. Système d'analyse d'échantillons (100 à 100b) selon la revendication 1 ou la revendication 2, dans lequel
l'organe de commande (1) est configuré pour recevoir des réglages de temps de démarrage différents pour chacun de la pluralité d'analyseurs d'échantillons (40a à 40g).

4. Système d'analyse d'échantillons (100 à 100b) selon l'une quelconque des revendications 1 à 3, dans lequel
l'analyseur d'échantillons comprend un panneau de commande pour commander une unité de mesure qui mesure un échantillon ; et
de l'électricité est fournie au panneau de commande au moment du démarrage de l'analyseur d'échantillons.

5. Système d'analyse d'échantillons (100 à 100b) selon l'une quelconque des revendications 1 à 4, dans lequel
l'organe de commande (1) comprend une unité de stockage qui stocke des informations relatives à un temps de démarrage de l'analyseur d'échantillons en association avec des informations spécifiant l'analyseur d'échantillons.

6. Système d'analyse d'échantillons (100 à 100b) selon la revendication 5, dans lequel
l'unité de stockage stocke des informations de jour/heure tant qu'informations relatives au temps de démarrage de l'analyseur d'échantillons ; et
l'organe de commande (1) est configuré pour démarrer l'analyseur d'échantillons sur la base des informations de jour/heure stockées dans l'unité de stockage.

7. Système d'analyse d'échantillons (100 à 100b) selon l'une quelconque des revendications 1 à 6, dans lequel
l'organe de commande (1) est configuré pour recevoir collectivement des réglages de temps de démarrage pour une pluralité de jours concernant au moins un jour de semaine, un jour férié ou un week-end.

8. Système d'analyse d'échantillons (100 à 100b) selon l'une quelconque des revendications 1 à 7, dans lequel
l'analyseur d'échantillons comprend : une unité de mesure qui mesure un échantillon ; et une unité de commande qui analyse des données de mesure délivrées en sortie par l'unité de mesure.

9. Système d'analyse d'échantillons (100 à 100b) selon la revendication 8, dans lequel l'organe de commande (1) est configuré pour transmettre une commande ordonnant un démarrage à l'unité de commande.

10. Système d'analyse d'échantillons (100 à 100b) selon l'une quelconque des revendications 1 à 9, dans lequel
l'organe de commande (1) comprend une unité d'affichage ; et
l'organe de commande (1) est configuré pour amener l'unité d'affichage à afficher un calendrier dans lequel des informations spécifiant l'analyseur d'échantillons et des informations relatives à un temps de démarrage sont affichées en association avec une date du calendrier.

11. Système d'analyse d'échantillons (100 à 100b) selon l'une quelconque des revendications 1 à 10, dans lequel
l'organe de commande (1) est configuré pour recevoir une instruction pour démarrer immédiatement des analyseurs d'échantillons parmi la pluralité d'analyseurs d'échantillons (40a à 40g).

12. Procédé de démarrage pour démarrer une pluralité d'analyseurs d'échantillons (40a à 40g) pour mesurer des échantillons, le procédé de démarrage comprenant :
la réception d'une combinaison d'analyseurs d'échantillons parmi la pluralité d'analyseurs d'échantillons (40a à 40g) ; et
le démarrage de la combinaison d'analyseurs d'échantillons parmi certains de la pluralité d'analyseurs d'échantillons (40a à 40g) ;
dans lequel
l'analyseur d'échantillons met en oeuvre une opération initiale après le démarrage ; et
l'opération initiale inclut au moins une opération de nettoyage et une vérification des antécédents d'une unité de mesure qui mesure un échantillon.

13. Support de stockage non transitoire stockant un programme informatique exécutable par un ordinateur pour mettre en oeuvre des opérations comprenant :
la réception d'une combinaison d'analyseurs d'échantillons parmi une pluralité d'analyseurs d'échantillons (40a à 40g) pour mesurer des échantillons ; et
le démarrage de la combinaison d'analyseurs d'échantillons parmi certains de la pluralité d'analyseurs d'échantillons (40a à 40g) ;
dans lequel
l'analyseur d'échantillons met en oeuvre une opération initiale après le démarrage ; et
l'opération initiale inclut au moins une opération de nettoyage et une vérification des antécédents d'une unité de mesure qui mesure un échantillon.
